# EUROPEAN PATENT APPLICATION

(11) **EP 4 799 924 A1**
(43) Date of publication of application: **02.09.2026**
(21) Application number: 26158100.3
(22) Date of filing: 12.02.2026
(51) Int. Cl.: B64C 9/22, B64D 45/00

(54) **ACTUATION CONTROL DEVICE FOR A HIGH LIFT SYSTEM, ASSOCIATED HIGH LIFT SYSTEM ARCHITECTURE, HIGH LIFT SYSTEM, AIRCRAFT AND METHOD OF CONTROLLING AN ACTUATION OF A HIGH LIFT SYSTEM**

(30) Priority: 27.02.2025 DE 102025000717
(71) Applicant: Airbus Operations GmbH, 21129 Hamburg (DE)
(72) Inventor: Haserodt, Jan, 21129 Hamburg (DE)
(74) Representative: Airbus Germany

(57) **Abstract**

This actuation control device (30) for a high lift system (16), comprises:
- an acquisition module (46), configured for acquiring a first output torque (OT1), of a first high lift system actuator (24A);
- a comparison module (48), configured for comparing the acquired first output torque (OT1) to at least one predetermined first threshold torque (TT1); and
- a determination module (50), configured for determining a monitoring signal (M) depending on the comparison of the acquired first output torque (OT1) to the at least one predetermined first threshold torque (TT1).

## Description

The present disclosure relates to an actuation control device for a high lift system. The disclosure also relates to a high lift system architecture comprising such an actuation control device and to an aircraft comprising such a high lift system architecture. The disclosure further relates to an aircraft comprising at least one high lift system architecture as above mentioned. The present disclosure further relates to a method of controlling an actuation of a high lift system using an actuation control device as above mentioned.

In the domain of high lift system, it is critical to ensure that the actuation of high lift system is properly controlled and/or monitored. Indeed, high lift control systems have a strong impact on the behavior of aircraft and it is critical to ensure that the actuation of such systems is appropriately controlled, to ensure that the aircraft has an appropriate controllability or at least to predict the controllability of the aircraft based on the control of the high lift system and of its actuation.

Furthermore, high lift systems, such as for example slats, present specific failure cases which can lead to high lift system skew. It is then critical to ensure that such failure cases can be controlled/monitored, in order to ensure safety of operation of the aircraft on which are installed such high lift systems.

For example, for leading edge high lift systems such as slats, one knows failure cases such as "free wheel" failure case and "powered skew" failure case.

In the "free wheel" failure case, at least one of the actuators of the high lift system is freely rotating such that the actuator cannot transmit its actuation force to the moveable surface of the high lift system. For example, if this happens for only one of the actuators of the high lift system, this can lead to an uneven deployment/retraction/positioning of the moveable surface, i.e. to a skewing in the high lift system.

In the "powered skew" failure case, the displacement of the moveable surface induced by at least one of the actuators is jammed such that the actuator transmit force to the moveable which cannot be converted to a movement of the panel. For example, if this happens for only one of the actuators of the high lift system, this can lead to an uneven deployment/retraction/positioning of the moveable surface, i.e. to a skewing in the high lift system.

Up to know, it is known to monitor high lift system with for example lanyards, in order to ensure that the above-mentioned failure cases do not occur. Such systems are however complex to implement and do not allow for precisely knowing where the failure is happening in the entire high lift system.

Furthermore, to ensure reliability of the high lift system, it is important to ensure that the actuation forces generated by the actuator of the high lift system do not exceed critical limits which could damage the high lift system.

To this end, one knows using mechanical torque limiters, which ensure safety of operation but are heavy and bulky.

The object of the present invention is thus to provide an actuation control device for a high lift system which ensures safety of operation and which is accurate and simple.

To this end, the invention relates to an actuation control device for a high lift system, comprising:
- an acquisition module, configured for acquiring a first output torque, of a first high lift system actuator;
- a comparison module, configured for comparing the acquired first output torque to at least one predetermined first threshold torque; and
- a determination module, configured for determining a monitoring signal depending on the comparison of the acquired first output torque to the at least one predetermined first threshold torque.

The use of an actuation control device as above presented, and especially of a device configured for determining a monitoring signal depending on the comparison of the acquired first output torque to the at least one predetermined first threshold torque, is especially advantageous to detect failures and/or critical loads based directly on the output of the high lift system actuator, which ensures reliability, accuracy and simplicity of failures and/or critical loads detection.

According to other advantageous aspects of the invention, the actuation control device comprises one or more of the following features taken alone or according to all technically possible combinations:
- the acquisition module is further configured for acquiring a second output torque, of a second high lift system actuator, the comparison module being further configured for comparing the acquired second output torque to at least one predetermined second threshold torque, the determination module being configured for determining the monitoring signal further depending on the comparison of the acquired second output torque to the at least one predetermined second threshold;
- the acquisition module is further configured for acquiring a high lift system configuration information, the determination module being configured for determining the monitoring signal further depending on the acquired high lift system configuration information;
- the determined monitoring signal is a monitoring signal representative of a high lift system skew if the absolute value of the acquired first output torque is lower than the absolute value of the, or one of the predetermined first threshold torque(s) being a predetermined first threshold torque(s) corresponding to a skewing first threshold torque, and if the acquired high lift system configuration information is representative of a stowed high lift system configuration;
- the acquisition module is further configured for acquiring an airload information, the determination module being further configured for determining the monitoring signal further depending on the acquired airload information;
- the determined monitoring signal is a monitoring signal representative of a high lift system skew further if the airload information is below a predetermined airload threshold;
- the monitoring signal is a monitoring signal representative of an excessive load if the absolute value of the acquired first output torque is superior to the, or one of the predetermined first threshold torque(s) corresponding to a maximum first threshold torque;
- the actuation control device further comprises a command module, the command module being configured for generating a command information for the first high lift system actuator and/or for a brake of the high lift system and/or for a motor of the high lift system and/or for a human machine interface of the aircraft, the command information depending on the monitoring signal; and
- the command module is configured for generating a blocking command information when the monitoring signal is a monitoring signal representative of and excessive load, the blocking command information being configured for blocking the actuation of the first high lift system actuator.

The invention further relates to a high lift system architecture comprising an actuation control device as presented above, a first high lift system actuator and a first torque sensor, wherein the first torque sensor is configured for measuring an actuation torque of the first high lift system actuator and is connected to the actuation control device so that the acquisition module of the actuation control device is configured for acquiring the measured actuation torque as the first output torque.

The invention further relates to a high lift system comprising a wing body, at least one moveable surface and a high lift system architecture as presented above, the first high lift system actuator being connected to the wing body and to the at least one moveable surface for actuating the at least one moveable surface relatively to the wing body.

According to other advantageous aspects of the invention, the high lift system comprises one or more of the following features taken alone or according to all technically possible combinations:
- the high lift system comprises a plurality of moveable surfaces and the high lift system architecture comprises a plurality of first high lift system actuators and first torque sensors, each first high lift system actuator being connected to the wing body and to a respective moveable surface, each first torque sensor being configured to measure an actuation torque of a respective first high lift system actuator,
   the determination module being configured for determining a monitoring signal depending on the comparison of each acquired first output torques to a respective predetermined first threshold torque, wherein the predetermined first threshold torque differs for at least two of the predetermined first threshold torques; and
- the high lift system comprises a sealing element and/or a spring element arranged between the wing body and the moveable surface, the at least one predetermined first threshold torque being predetermined as a function of the sealing element and/or spring element.

Furthermore, the invention relates to an aircraft comprising a high lift system as presented above.

The invention also relates to a method of controlling an actuation of a high lift system using an actuation control device as presented above, wherein the method comprises the following steps:
- acquisition of a first output torque of a first high lift system actuator;
- comparison of the acquired first output torque to at least one predetermined first threshold torque; and
- determination of a monitoring signal depending on the comparison of the acquired first output torque to the at least one predetermined first threshold torque.

The invention will be better understood when reading the following description, which is given solely by way of example and with reference to the appended drawings, in which:
- Figure 1 is a schematic view of an aircraft comprising a high lift system with a high lift system architecture comprising an actuation control device according to the invention;
- Figure 2 is a schematic view of the high lift system architecture of figure 1;
- Figure 3 is a detailed view of features of the high lift system architecture of figure 2 which are not illustrated in figure 2; and
- Figure 4 is a schematical graph of the evolution of an acquired first output torque and of a high lift system configuration information over time for an example flight of the aircraft.

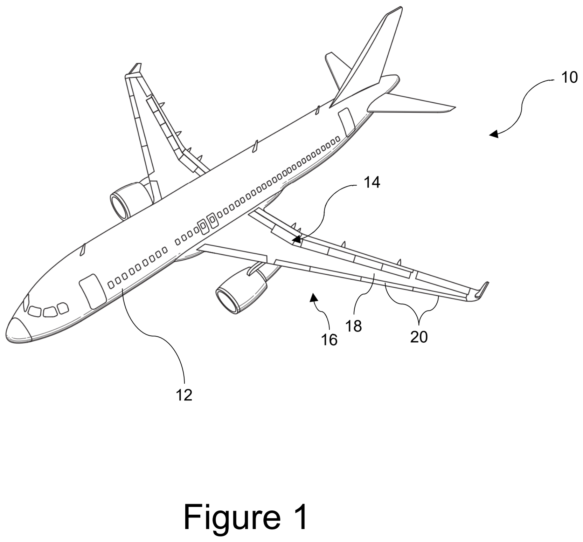

Referring to figure 1, an aircraft 10 comprises a fuselage 12 and wings 14.

The aircraft 10 is for example an airplane and is for example an airliner.

The aircraft 10 comprises a high lift system 16, for example arranged on the wings 14.

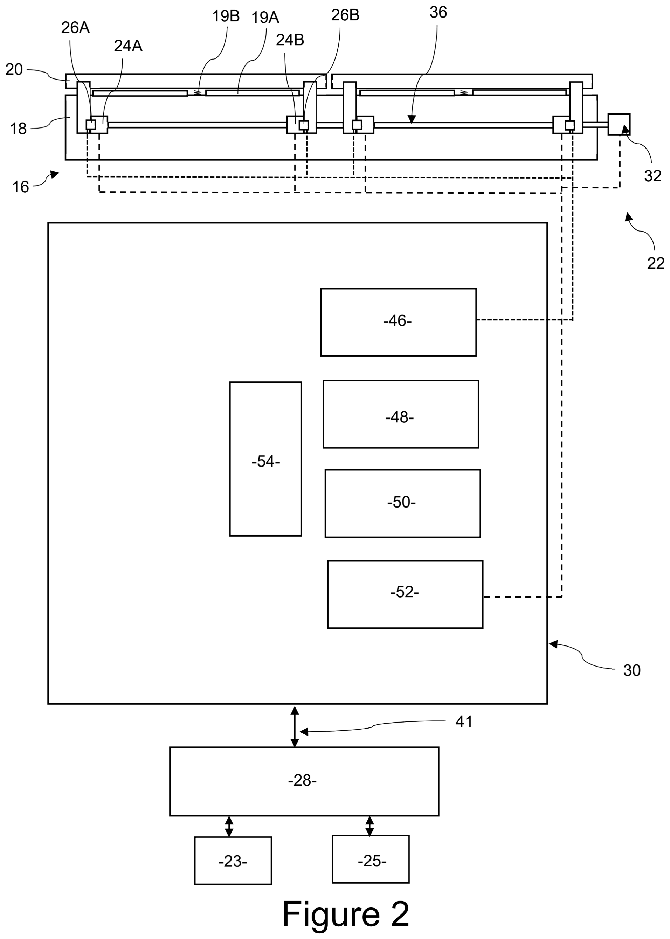

The high lift system 16 comprises in particular a wing body 18, a moveable surface 20 and a high lift system architecture 22. In the example illustrated on figures 1 and 2, the high lift system 16 comprises a plurality of moveable surfaces 20.

As visible from figure 1, the wing body 18 is for example a portion of the wing 14 which is fixed relative to the fuselage 12. In an example, the main body 14 corresponds to a main body of a foldable wing tip (non-referenced).

For example, and as visible from figure 1, the moveable surface 20 is a slat. In other words, in such an example, the high lift system 16 forms a leading-edge high lift system/device.

The moveable surface 20 is moveable relative to the wing body 18. For example, the moveable surface 20 is moveable between a stowed position and a deployed position, the moveable surface 20 being further away from the wing body 18 when it is in its deployed position than when it is in its stowed position.

In an example, and as illustrated in figure 2, the high lift system 16 comprises a sealing element 19A and/or a spring element 19B.

The sealing element 19A and/or the spring element 19B is arranged between the wing body 18 and the moveable surface 20.

For example, and as illustrated in figure 2, the sealing element 19A and/or the spring element 19B is attached to the wing body 18. As this will be presented in more details later, the sealing element 19A and/or the spring element 19B is in contact with the moveable surface 20 when the moveable surface 20 is in its stowed position or in other words, when the high lift system 16 is in its stowed configuration.

As this will be presented in more details later, the aircraft 10 for example further comprises an airload evaluation unit 23 and/or a high lift system configuration evaluation unit 25.

The airload evaluation unit 23 is configured for evaluating an airload applied to the aircraft 10 and/or to the moveable surface 20. For example, the airload evaluation unit 23 comprises, or is connected to, an airspeed probe (non-represented). The airload evaluation unit 25 is for example connected or integrated in a flight control computer 28 of the high lift system architecture 22 which will be presented in more details later.

The high lift system configuration evaluation unit 25 is configured for evaluating a configuration of the high lift system 16. For example, the high lift system configuration evaluation unit 25 is configured for evaluating a position and/or an angle of the moveable 20 relative to the wing body 18. To that end, the high lift system configuration evaluation unit 25 is for example connected or integrated in a flight control computer 28 of the high lift system architecture 22 which will be presented in more details later.

The high lift system architecture 22 is for example configured for actuating and controlling an actuation of the high lift system 16. In other words, the high lift system architecture 22 is for example configured for actuating and controlling the movement of the moveable surface 20 relative to the wing body 18.

As illustrated in figure 2, the high lift system architecture 22 comprises at least one first high lift system actuator 24A and at least one first torque sensor 26A. As this will be presented later, and for example, the high lift system architecture 22 further comprises at least one second high lift system actuator 24B and at least one second torque sensor 26B.

As presented in figure 2, the high lift system architecture 22 comprises for example a plurality of first high lift system actuators 24A, of second high lift system actuators 24B, of first torque sensors 26A and/or of second torque sensors 26B.

In particular, and for example, the high lift system architecture 22 comprises a first high lift system actuator 24A and a first torque sensor 26A for each moveable surface 20.

As presented in the example of figure 2, the high lift system architecture 22 further comprises for example a second high lift system actuator 24B and a second torque sensor 26B for each moveable surface 20. In such an example, and as presented later, each moveable surface 20 is then for example connected to the wing body 18 with the, or one of the, first high lift system actuator 24A and with the, or one of the, second high lift system actuator 24B.

As above mentioned, the high lift system architecture 22 further comprises for example a flight control computer 28.

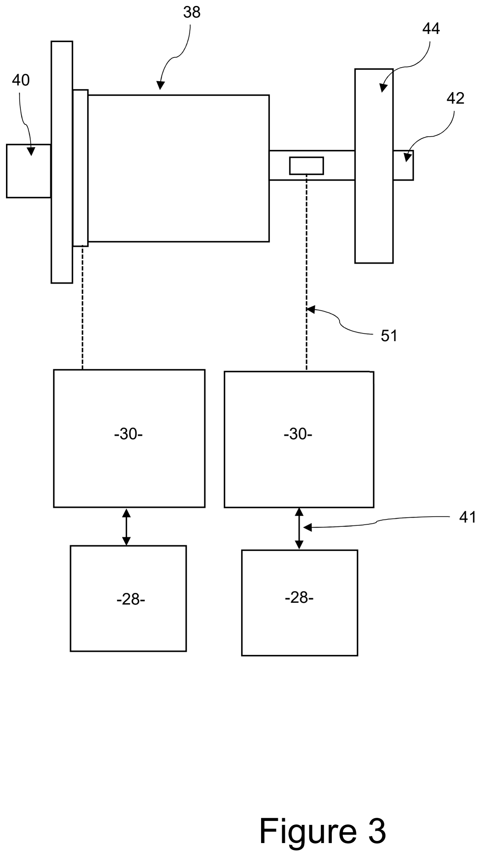

As presented in figures 2 and 3, the high lift system architecture 22 comprises an actuation control device 30.

The high lift system architecture 22 further comprises for example at least one motor 32.

For example, the or each motor 32 is coupled to a Power Control Unit (not referenced - also abbreviated PCU) of the high lift system 16.

Each motor 32 is for example a hydraulic motor. In an example, each motor 32 is a redundant motor.

In another example, the or each motor 32 is an electric motor.

Each high lift system actuator 24A, 24B is connected to the wing body 18 and to one of the moveable surfaces 20.

Each high lift system actuator 24A, 24B is for example configured for moving the moveable surface 20 to which the actuator 24A, 24B is connected relatively to the wing body 18, in particular between its stowed and deployed positions.

As illustrated in the example of figure 2, each actuator 24A, 24B is connected to the, or one of the, motor(s), via at least one transmission shaft(s) 36 of the high lift system 16.

Each actuator 24A, 24B is for example configured for converting a movement of the motor 32 to a movement of the at least one moveable surface 20.

For example, each actuator 24A, 24B is formed as a Geared Rotary Actuator (generally abbreviated GRA) and is configured for converting a rotational movement of the motor 32 to a deployment/stowing movement of the at least one moveable surface 20. Each actuator 24A, 24B is then for example configured to cooperate with a track (non-represented), for example geared, of the moveable surface 20.

An example of an actuator 24A, 24B is presented on figure 3. The actuator 24A, 24B comprises for example an actuator body 38, an input shaft 40, an output shaft 42 and a geared wheel 44.

The input shaft 40 is for example connected to the transmission shaft 36 and is for example a portion of the transmission shaft 36.

The output shaft 42 is for example driven by the input shaft 36

The geared wheel 44 is fastened to the output shaft 42 and is for example configured for cooperating with the moveable surface 20.

The actuator body 38 is for example connected to the input shaft 36 and to the output shaft 42 and is for example configured for guiding in rotation the input shaft 36 and the output shaft 42.

The actuator body 38 is further for example connected and/or fastened to the wing body 20, in particular to be substantially motionless relatively to the wing body 20.

Each torque sensor 26A, 26B is configured to measure an actuation torque of a respective high lift system actuator 24A, 24B. In particular, and as this will be presented in more details later, each torque sensor 24A, 24B is for example configured to measure an actuation torque corresponding to the sum of forces applied to the actuator 24A, 24B on which the torque sensor 26A, 26B is installed. For example, and as presented in more details later, each torque sensor is configured for measuring amongst others, the force applied to the moveable surface 20 by the sealing element 19A and/or the spring element 19B when high lift system 16 is in its stowed position.

For example, each of the first high lift system actuator 24A is equipped with at least one first torque sensor 26A such that said first torque sensor 24A is configured to measure an actuation torque of said first high lift system actuator 24A. For example, each of the second high lift system actuator 24B is equipped with at least one second torque sensor 26B such that said second torque sensor 24B is configured to measure an actuation torque of said second high lift system actuator 24B.

The torque sensor 26A, 26B is for example arranged on the input shaft 36 of the actuator 24A, 24B, on the output shaft 42 of the actuator or between the actuator body 38 and the wing body 20.

In the example of figure 3, the actuator 24A, 24B is equipped with a torque sensor 26A, 26B arranged on the output shaft 42 and with a torque sensor 26A, 26B arranged between the actuator body 38 and the wing body 20 (only a small portion of the wing body 20 being illustrated in figure 3).

As presented above, the high lift system architecture 22 comprises at least one actuation control device 30. In an example, the high lift system architecture comprises a plurality of actuation control devices 30. For example, and as illustrated in figure 3 (and not illustrated on figure 2 for clarity purposes), the high lift system architecture comprises two actuation control devices 30.

As visible from figure 3, in such an example the high lift system architecture 22 comprises for example two flight control computers 28, each flight control computer 28 being connected with a respective actuation control device 30.

The flight control computer 28 and the actuation control device 30 are for example connected via a databus 41 of the high lift system architecture 22, illustrated with arrows on figures 2 and 3. The flight control computer 28 and the actuation control device 30 are for example connected via a databus of type ARINC 629, ARINC 629 or ARINC 664 (also known as AFDX or Avionics Full-Duplex Switched Ethernet), ARINC standing for Aeronautical Radio Incorporated from Annapolis.

In other non-illustrated embodiments, the flight control computer 28 and the actuation control device 30 are connected with a discrete connection cable, for example configured for transporting an analog signal.

Each actuation control device 30 is configured to control the actuation of the high lift system 16.

Each actuation control device 30 is connected to the first torque sensor 26A, and more particularly, as presented in the example of figure 2, to each first torque sensor 26A. For example, each actuation control device 30 is further configured connected to the second torque sensor 26B, and more particularly, as presented in the example of figure 2, to each second torque sensor 26B.

Each actuation control device 30 is for example further connected to the motor 32 and/or to the first 24A and/or second 24B high lift system actuator and/or to a brake (non-referenced) of the high lift system 16.

Each actuation control device 30 is for example connected to the torque sensors 26A, 26B, to the actuators 24A, 24B, to the motor 32 and/or to the brake via a connection cable 51, for example configured for transporting an analog signal.

As illustrated from figure 2, the actuation control device 30 comprises acquisition module 46, a comparison module 48 and a determination module 50. Furthermore, the actuation control device further comprises for example a command module 52 and a storage module 54.

The acquisition module 46 is configured for acquiring a first output torque OT1, of the first high lift system actuator 24A. It is understood that when the acquisition module 46 comprises a plurality of first high lift system actuators 24A, the acquisition module is configured for acquiring the first output torque OT1 of at least one of the first high lift system actuators 24A, and for example of all the first high lift system actuators 24A.

The acquisition module 46 is for example configured for acquiring the first output torque OT1 of the first high lift system actuator 24A from the or one of the first torque sensor(s) 26A equipping said first high lift system actuator 24A. The first torque sensor 26A is then for example connected to the actuation control device 30 so that the acquisition module 46 is configured for acquiring the actuation torque measured by the first torque sensor 26A as the first output torque OT1.

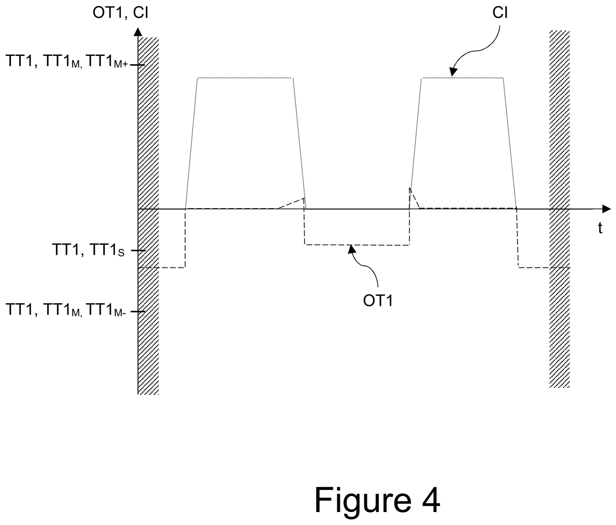

Figure 4 represents for example the evolution of the first output torque OT1 over time t, during various phases of flight of the aircraft.

For example, the acquisition module 46 is further configured for acquiring a second output torque OT2, of the second high lift system actuator 24B. It is understood that when the acquisition module 46 comprises a plurality of second high lift system actuators 24B, the acquisition module is configured for acquiring the second output torque OT2 of at least one of the second high lift system actuators 24B, and for example of all the second high lift system actuators 24B.

The acquisition module 46 is for example configured for acquiring the second output torque OT2 of the second high lift system actuator 24B from the or one of the second torque sensor(s) 26B equipping said second high lift system actuator 24B. The second torque sensor 26B is then for example connected to the actuation control device 30 so that the acquisition module 46 is configured for acquiring the actuation torque measured by the second torque sensor 26B as the second output torque OT2.

For example, the acquisition module 46 is further configured for acquiring a high lift system configuration information CI. For example, the acquisition module 46 is configured for acquiring the high lift system configuration information CI from the high lift system configuration evaluation unit 25. In the example presented in figure 2, the acquisition module 46 is configured for acquiring the high lift system configuration information CI from the high lift system configuration evaluation unit 25 through the flight control computer 28.

Figure 4 represents for example the evolution of the high lift system configuration information CI over time t, during various phases of flight of the aircraft, the high lift system configuration information CI corresponding here to a percentage of deployment of the moveable surface 20 relative to the wing body 18.

For example, the acquisition module 46 is further configured for acquiring an airload information AI. For example, the acquisition module 46 is configured for acquiring the airload information AI from the airload evaluation unit 23. In the example presented in figure 2, the acquisition module 46 is configured for acquiring the airload information AI from the airload evaluation unit 23 through the flight control computer 28.

The comparison module 48 is configured for comparing the acquired first output torque OT1 to at least one predetermined first threshold torque TT1. The comparison module 48 is for example configured for comparing each acquired first output torques OT1 to the at least one predetermined first threshold torque TT1. It is understood that the predetermined first threshold torque(s) TT1 may differ for each of the acquired first output torque OT1, that is, that predetermined first threshold torque(s) TT1 are different depending on the first high lift system actuator 24A from which the first output torque OT1 is acquired.

In an example, the comparison module 48 is configured for comparing the acquired first output torque(s) OT1 to a plurality of predetermined first threshold torques TT1. As this will be presented in more details later, and for example, one of the predetermined first threshold torques TT1 corresponds to skewing first threshold torque TT1s. In alternative, or in complement, one of the predetermined first threshold torques corresponds to a maximum first threshold torque TT1_{M}.

One understands for the above that the term "first" in "first threshold torque" is employed to indicate that this threshold is to be applied to first output torques OT1. In other words, and as presented above, there may be a plurality of first threshold torques TT1, for each of the first output torques OT1.

The comparison module 48 is for example further configured for comparing the acquired second output torque OT2 to at least one predetermined second threshold torque TT2. The comparison module is for example configured for comparing each acquired second output torques OT2 to the at least one predetermined second threshold torque TT2. It is understood that the predetermined second threshold torque(s) may differ for each of the acquired second output torque OT2, that is, that predetermined second threshold torque(s) TT2 are different depending on the second high lift system actuator 24B from which the second output torque OT2 is acquired.

In an example, the comparison module 48 is configured for comparing the acquired second output torque(s) OT2 to a plurality of predetermined second threshold torques TT2. As this will be presented in more details later, and for example, one of the predetermined second threshold torques TT2 corresponds to a skewing second threshold torque TT2_{S}. In alternative, or in complement, one of the predetermined second threshold torques corresponds to a maximum second threshold torque TT2_{M}.

One understands for the above that the term "second" in "second threshold torque" is employed to indicate that this threshold is to be applied to second output torques OT2. In other words, and as presented above, there may be a plurality of second threshold torques TT2, for each of the second output torques OT2.

As this will be presented in more details later, and for example, the predetermined first TT1 and second TT2 threshold(s) are stored in the storage module 54.

For example, the storage module 54 is configured for storing at least one predetermined first threshold torque TT1 for each of the first high lift system actuator(s) 24A and, for example, at least one predetermined second threshold torque TT2 for each of the second high lift system actuator(s) 24B.

As this will be understood in more detail later, the first TT1, respectively second TT2, threshold torque corresponding to a skewing first TT1_{S}, respectively second TT2_{S}, threshold torque is a torque threshold allowing for the determination of a skewing of the high lift system 16.

The absolute value or the first TT1_{S}, respectively second TT2_{S}, skewing threshold torque, is for example comprised between 100 Nm and 500Nm. For example, and as visible from figure 4, the torque has a negative value and the first TT1_{S}, respectively second TT2_{S}, skewing threshold torque, is for example comprised between -100 Nm and -500Nm. As this will be presented in more details later, the negative value here transcribes the fact that the torque corresponds to a torque applied to move the moveable surface 20 to its stowed position.

The at least one predetermined first TT1 and/or second TT2 threshold torque is for example predetermined as a function of the sealing element 19A and/or of the spring element 19B. In particular the first TT1s and/or second TT2_{S}, skewing threshold torque is predetermined as a function of the sealing element 19A and/or of the spring element 19B. For example, the stiffer the sealing element 19A and/or of the spring element 19B is, the higher the first TT1_{S} and/or second TT2_{S}, skewing threshold torque is.

As this will be understood in more detail later, the first TT1, respectively second TT2, threshold torque corresponding to a maximum first TT1_{M}, respectively second TT2_{M}, threshold torque is a torque threshold allowing for the determination of a excessive load in the high lift system 16.

The absolute value or the first TT1_{M}, respectively second TT2_{M}, maximum threshold torque, is for example comprised between 1000 Nm and 5000Nm. For example, and as this will be presented in more details later, the torque has a negative value and the first TT1_{M}, respectively second TT2_{M}, maximum threshold torque, is for example comprised between -1000 Nm and -5000Nm. In another example, the torque has a positive value and the first TT1_{M}, respectively second TT2_{M}, maximum threshold torque, is for example comprised between +1000 Nm and +5000Nm

As this will be presented in more details later, the negative value here transcribes the fact that the torque corresponds to a torque applied to move the moveable surface 20 to its stowed position and the positive value here transcribes the fact that the torque corresponds to a torque applied to move the moveable surface 20 to its deployed position.

It is further understood, in particular from figure 4 that the comparison module 48 is for example configured for comparing the acquired first OT1, respectively second OT2, output torque to a plurality of predetermined first TT1_{M}, respectively second TT2_{M}, maximum threshold torques. One of this plurality of predetermined first TT1_{M}, respectively second TT2_{M}, maximum threshold torques is for example a positive torque, corresponding to a maximum deployment torque (referenced TT1_{M+} on figure 4) and another of this plurality of predetermined first TT1_{M}, respectively second TT2_{M}, maximum threshold torques is for example a negative torque, corresponding to a maximum stowing torque (referenced TT1_{M-} on figure 4).

In an example, the comparison module is further configured for comparing the airload information AI to a predetermined airload threshold AT.

For example, the predetermined airload threshold AT is stored in the storage module 54.

In an example, the airload information Al is deduced from an airspeed information. In such an example, the predetermined airload threshold AT is an airload, for example applied to the moveable surface 20 corresponding to an airspeed comprised between 5 and 20 m/s.

It is understood that the result of the comparison of the airload information AI to a predetermined airload threshold AT transcribes for example the fact the aircraft is airborne or not.

The determination module 50 is configured for determining a monitoring signal M depending on the comparison of the acquired first output torque OT1 to the at least one predetermined first threshold torque TT1.

For example, the determination module 50 is configured for determining the monitoring signal M further depending on the comparison of the acquired second output torque OT2 to the at least one predetermined second threshold TT2.

For example, the determination module 50 is configured for determining the monitoring signal M further depending on the acquired high lift system configuration information CI.

For example, the determination module is further configured for determining the monitoring signal M further depending on the acquired airload information AI.

The monitoring signal M is for example representative of a high lift system skew under certain conditions that will be presented below. In alternative, or in complement, the monitoring signal M is for example representative of an excessive load in the high lift system under certain conditions that will be presented below.

The determination module 50 is for example configured for determining a monitoring signal M representative of a high lift system skew if the absolute value of the acquired first output torque OT1 is lower than the absolute value of the, or one of the, predetermined first threshold torque(s) TT1_{S}, corresponding to a skewing first threshold torque, and if the acquired high lift system configuration information CI is representative of a stowed high lift system configuration.

For example, the high lift system configuration information CI is representative of a stowed high lift system configuration if the high lift system configuration information CI is inferior to 10%, for example substantially equal to 0%, of deployment of the moveable surface 20. In the illustrated of figure 4, the high lift system configuration information CI is representative of a stowed high lift system configuration when the CI curve is substantially equal to zero.

The determination module 50 is for example configured for determining a monitoring signal M_{S} representative of a high lift system skew if the absolute value of the acquired second output torque OT2 is lower than the absolute value of the, or one of the, predetermined second threshold torque(s) TT2_{S}, corresponding to a skewing second threshold torque, and if the acquired high lift system configuration information CI is representative of a stowed high lift system configuration.

In particular, under nominal conditions, the acquired first/second output torque OT1, OT2 when the high lift system is in stowed configuration results from the cooperation between the moveable surface 20 and the wing body 18, for example through the sealing element 19A and/or the spring element 19B, and from the first actuator 24A applying a torque such that the moveable surface 20 is maintained in its stowed position. Having the absolute value of the acquired first/second output torque OT1, OT2 lower than the absolute value of the, or one of the, predetermined first TT1ₛ /second TT2ₛ skewing threshold torque(s) while the high lift system configuration information CI is representative of a stowed high lift system configuration thus transcribes a failure in the actuation of the moveable surface 20 and a skew of the high lift system 16.

For example, the determination module 50 is further configured for determining the monitoring signal M based on the airload information AI.

For example, the determined monitoring signal M_{S} is representative of a high lift system skew further if the airload information Al is below a predetermined airload threshold AT. In other words, in such and example, the determination module 50 is for example configured for determining a signal representative of a high lift system skew if the absolute value of the acquired first/second output torque OT1, OT2 is lower than the absolute value of the, or one of the, predetermined first/second threshold torque(s), corresponding to a skewing first TT1ₛ /second TT2ₛ threshold torque, if the acquired high lift system configuration information CI is representative of a stowed high lift system configuration and if the airload information Al is below the predetermined airload threshold AT.

In particular, the airload applies forces on the moveable surface that reduce the torque necessary to maintain the moveable surface in its stowed position, and having the determination of the monitoring signal M further depending on the acquired airload information AI ensures that a reduced first/second output torque OT1, OT2 does not result from applied airloads.

In the example illustrated on figure 4, the airload information AI is below the predetermined airload threshold AT in the hatched regions of the graph. In particular, such sections correspond for example to sections where the airload is representative of the aircraft 10 being on the ground.

It is then understood that in some embodiment, the determined monitoring signal M_{S} is representative of a high lift system skew independently of the airload information AI. For example, an in such an example, the skewing threshold torque TT1_{S}, TT2_{S} is chosen such that skewing can be identified independently of the effect of the airload.

The determination module 50 is for example configured for determining a monitoring signal M_{L} representative of an excessive load if the absolute value of the acquired first output torque OT1 is superior to the, or one of the, predetermined first threshold torque(s) TT1_{M} corresponding to a maximum first threshold torque.

Similarly, the determination module 50 is for example configured for determining a monitoring signal M_{L} representative of an excessive load if the absolute value of the acquired second output torque OT2 is superior to the, or one of the, predetermined first threshold torque(s) TT2_{M} corresponding to a maximum first threshold torque.

The command module 52 is for example configured for generating a command information for the first high lift system actuator 24A and/or for the second high lift system actuator 24B and/or for the motor 32 and/or for the brake (non-referenced) and/or for a human machine interface of the aircraft (non-referenced).

The command information C depends for example on the monitoring signal M.

In particular, the command module 52 is for example configured for generating an alert command information C_{A} when the monitoring signal M is a monitoring signal representative of a skewing M_{S}.

In particular, the command module 52 is for example configured for generating a blocking command information C_{B} when the monitoring signal M is a monitoring signal representative of an excessive load M for one of the first or second actuators .

The alert command information C_{A} is for example configured to be received by the human machine interface (not represented). For example, the human machine interface is configured to display a visual information representative of a skewing upon receiving the alert command information C_{A}.

The blocking command information C_{B} is for example configured for blocking the actuation of the first 24A and/or second 24B high lift system actuator. For example, the blocking command information is configured to be receive by the first high lift system actuator 24A and/or for the second high lift system actuator 24B and/or for the motor 32 and/or for the brake (non-represented) so that the first high lift system actuator 24A and/or for the second high lift system actuator 24B and/or for the motor 32 and/or for the brake (non- represented) blocks the first 24A and/or second 24B high lift system actuator.

In an example, the blocking command information C_{B} corresponds to a power off signal. In particular, and in such an example, the blocking command information is configured to be received by a brake (non-represented) being a power off brake. In such an example, the blocking command information C_{B} thus triggers the braking of the brake by cutting power supply to this brake.

As presented above, when the high lift system architecture 22 comprises a plurality of first/second high lift system actuators 24A, 24B and first/second torque sensors 26A, 26B, the determination module 50 is for example configured for determining a monitoring signal M depending on the comparison of each acquired first/second output torques TT1, TT2 to a respective predetermined first/second threshold torque TT1, TT2.

As above mentioned, the predetermined first/second threshold torque TT1, TT2 differs for example for at least two of the predetermined first/second threshold torques TT1, TT2.

For example, and as presented in figure 2, the acquisition module 46, the comparison module 48 and the determination module and for example the command module 52 and the storage module 54 are each implemented as analog signal processing/data storing devices:
In a non-illustrated example, each of these devices are redundant and implement on a first and a second circuits.

In a variant (not shown), the acquisition module 46, the comparison module 48 and the determination module and for example the command module 52 and the storage module 54 are each produced in the form of a programmable logic components, such as a FPGA (Field Programmable Gate Array), or in the form of a dedicated integrated circuit, such as an ASIC (Application Specific Integrated Circuit), or in the form of any combination of ASIC, FPGA and/or software.

In a further non illustrated example, the actuation control device 30 is formed as an information processing unit (non-represented) comprising, for example, a memory associated with a processor (non-represented).

Such an example the acquisition module 46, the comparison module 48 and the determination module and for example the command module 52 and the storage module 54 are each produced in the form of software executable by the processor. The memory is then able to store an acquisition software, designed for acquiring a first output torque OT1, of the first high lift system actuator 24A, a comparison software, designed to compare the acquired first output torque OT1 to at least one predetermined first threshold torque TT1, a determination software, designed for determining a monitoring signal M depending on the comparison of the acquired first output torque OT1 to the at least one predetermined first threshold torque TT1, and for example a command software, configured for generating a command information, and a storage module, configured for configured for storing at least one predetermined first threshold torque TT1 for the or each of the first high lift system actuator(s) 24A.

The processor of the information processing unit is then able to execute the acquisition software, the comparison software, the determination software and for example the command software and the storage software.

When the actuation control device 30 is made in the form of one or several software programs, i.e., in the form of a computer program, it is further able to be stored on a medium, not shown, readable by computer. The computer-readable medium is for example a medium suitable for storing electronic instructions and able to be coupled with a bus of a computer system. As an example, the readable medium is an optical disc, a magnetic-optical disc, a ROM memory, a RAM memory, any type of non-volatile memory (for example, EPROM, EEPROM, FLASH, NVRAM), a magnetic card or an optical card. A computer program including software instructions is then stored on the readable medium.

A method of controlling an actuation of a high lift system 16 using an actuation control device 30 as presented above will now be presented.

In an acquisition step, a first output torque OT1 of the first high lift system actuator 24A is acquired.

In a comparison step, the acquired first output torque OT1 is compared to the, or at least one of the, predetermined first threshold torque.

In a determination step, a monitoring signal M is determined based on the comparison of the acquired first output torque OT1 to the at least one predetermined first threshold torque TT1.

As above mentioned, the determining a monitoring signal M depending on the comparison of the acquired first output torque OT1 to at least one predetermined first threshold torque TT1 in an actuation control device especially relevant to ensure reliability, accuracy and simplicity of failures and/or critical loads detection.

The determining of the monitoring signal M further depending on the comparison of the acquired second output torque TT2 to the at least one predetermined second threshold TT2 is especially relevant to better detect failures and/or critical loads in the high lift system, in particular since this ensures considering two of the high lift systems actuators 24A, 24B. This is further especially relevant to detect skewing in the high lift system 16.

The determining of the monitoring signal M further depending on the acquired high lift system configuration information CI and/or on the airload information AI is especially advantageous since the first output torque OT1 depends on the high lift system configuration and on the airload. Such determining thus ensures relevance of the monitoring signal M.

In particular, having a determined monitoring signal M_{S} representative of a high lift system skew if the absolute value of the acquired first output torque OT1 is lower than the absolute value of the, or one of the predetermined first threshold torque(s) OT1_{S} corresponding to a skewing first threshold torque, and if the acquired high lift system configuration information CI is representative of a stowed high lift system configuration is especially advantageous for ensuring that the first output torque OT1 is compared with threshold OT1s adapted to such first output torque OT1. In particular, the expected first output torque OT1 is known when the configuration of the high lift system is a stowed high lift system configuration.

Determining the monitoring signal M_{S} as representative of a high lift system skew further if the airload information Al is below a predetermined airload threshold Al is further especially advantageous if since the first output torque OT1 depends on the airload information AI. Thus, determining high lift system skew only for limited airloads ensures accuracy of the determination of the monitoring signal and prevents for example the determining of a monitoring signal M_{S} representative of a high lift system skew that would merely result from airload and not from a failure in the high lift system 16.

A monitoring signal M_{L} representative of an excessive load if the absolute value of the acquired first output torque OT1 is superior to the, or one of the predetermined first threshold torque(s) TT1_{M} corresponding to a maximum first threshold torque is expecially relevant to allow for limiting excessive actuation in the high lift system 16.

The generating of a command information C depending of the monitoring signal M, and in particular the generating of a blocking command information C when the monitoring signal M is a monitoring signal representative of and excessive load M_{L} is especially relevant since this allows the actuation control device to act as a torque limiter. In particular, such features allows not relying on heavy and complex mechanical torque limiters. This further contributes in simplifying the high lift system 16.

Having predetermined a plurality of first threshold torques TT1 associated with a plurality of first torque sensors 26A and having different first threshold torques TT1 for at least two of the plurality of first threshold torques TT1 allows further improving the accuracy of the actuation control device.

### Reference signs:

- 10: aircraft
- 12: fuselage
- 14: wing
- 16: high lift system
- 18: wing body
- 19A: sealing element
- 19B: spring element
- 20: moveable surface
- 22: high lift system architecture
- 23: airload acquisition unit
- 24A: first high lift system actuator
- 24B: second high lift system actuator
- 25: high lift system configuration evaluation unit
- 26A: first torque sensor
- 26B: second torque sensor
- 28: flight control computer
- 30: actuation control device
- 32: motor
- 36: transmission shaft
- 38: actuator body
- 40: input shaft
- 41: databus
- 42: output shaft
- 44: geared wheel
- 46: acquisition module
- 48: comparison module
- 50: determination module
- 51: connection cable
- 52: command module
- 54: storage module
- OT1: first output torque
- OT2: second output torque
- CI: high lift system configuration information
- AI: airload information
- AT: airload threshold
- TT1: first threshold torque
- TT2: second threshold torque
- TT1s: skewing first threshold torque
- TT1_{M}: maximum first threshold torque
- TT2_{S}: skewing second threshold torque
- TT2_{M}: maximum second threshold torque
- TT1_{M+}: maximum first deployment threshold torque
- TT1_{M-}: maximum first stowing threshold torque
- M: monitoring signal
- M_{S}: monitoring signal representative of skewing
- M_{L}: monitoring signal representative of excessive load
- C: command information
- C_{B}: stopping command information
- C_{A}: alert command information

## Claims

1. Actuation control device (30) for a high lift system (16), comprising:
- an acquisition module (46), configured for acquiring a first output torque (OT1), of a first high lift system actuator (24A);
- a comparison module (48), configured for comparing the acquired first output torque (OT1) to at least one predetermined first threshold torque (TT1); and
- a determination module (50), configured for determining a monitoring signal (M) depending on the comparison of the acquired first output torque (OT1) to the at least one predetermined first threshold torque (TT1).

2. Actuation control device (30) for a high lift system according to claim 1, wherein the acquisition module (46) is further configured for acquiring a second output torque (OT2), of a second high lift system actuator (24B), the comparison module (48) being further configured for comparing the acquired second output torque (OT2) to at least one predetermined second threshold torque (TT2), the determination module (50) being configured for determining the monitoring signal (M) further depending on the comparison of the acquired second output torque (OT2) to the at least one predetermined second threshold (TT2).

3. Actuation control device (30) according to claim 1 or 2, wherein the acquisition module (46) is further configured for acquiring a high lift system configuration information (CI), the determination module (50) being configured for determining the monitoring signal (M) further depending on the acquired high lift system configuration information (CI).

4. Actuation control device (30) according to claim 3, wherein the determined monitoring signal (M) is a monitoring signal representative of a high lift system skew (M_{S}) if the absolute value of the acquired first output torque (OT1) is lower than the absolute value of the, or one of the predetermined first threshold torque(s) (TT1) being a predetermined first threshold torque(s) corresponding to a skewing first threshold torque (TT1s), and if the acquired high lift system configuration information (CI) is representative of a stowed high lift system configuration.

5. Actuation control device (30) according to any of the preceding claims, wherein the acquisition module (46) is further configured for acquiring an airload information (Al), the determination module (50) being further configured for determining the monitoring signal (M) further depending on the acquired airload information (AI).

6. Actuation control device (30) according to claims 4 and 5, wherein the determined monitoring signal (M) is a monitoring signal representative of a high lift system skew (M_{S}) further if the airload (AI) information is below a predetermined airload threshold (AT).

7. Actuation control device (30) according to any of the preceding claims, wherein the monitoring signal (M) is a monitoring signal representative of an excessive load (M_{L}) if the absolute value of the acquired first output torque (OT1) is superior to the, or one of the predetermined first threshold torque(s) corresponding to a maximum first threshold torque (TT1_{M}).

8. Actuation control device (30) according to any of the preceding claims, wherein the actuation control device (30) further comprises a command module (52), the command module (52) being configured for generating a command information (C) for the first high lift system actuator (24B) and/or for a brake of the high lift system (16) and/or for a motor (32) of the high lift system (16) and/or for a human machine interface of the aircraft (10), the command information (C) depending on the monitoring signal (M).

9. Actuation control device (30) according to claim 7 and 8, wherein the command module (52) is configured for generating a blocking command information (C_{B}) when the monitoring signal (M) is a monitoring signal representative of and excessive load (M_{S}), the blocking command information (C_{B}) being configured for blocking the actuation of the first high lift system actuator (24B).

10. High lift system architecture (22) comprising an actuation control device (M_{S}) according to any of the claims 1 to 9, a first high lift system actuator (24A) and a first torque sensor (26A), wherein the first torque sensor (26A) is configured for measuring an actuation torque of the first high lift system actuator (24A) and is connected to the actuation control device (30) so that the acquisition module (46) of the actuation control device (30) is configured for acquiring the measured actuation torque as the first output torque (OT1).

11. High lift system (16) comprising a wing body (18), at least one moveable surface (20) and a high lift system architecture (22) according claim 10, the first high lift system actuator (24A) being connected to the wing body (18) and to the at least one moveable surface (20) for actuating the at least one moveable surface (20) relatively to the wing body (18).

12. High lift system (16) according to claim 11, wherein the high lift system (16) comprises a plurality of moveable surfaces (20) and wherein the high lift system architecture (22) comprises a plurality of first high lift system actuators (24A) and first torque sensors (26A), each first high lift system actuator (24A) being connected to the wing body (18) and to a respective moveable surface (20), each first torque sensor (26A) being configured to measure an actuation torque of a respective first high lift system actuator (24A),
the determination module (50) being configured for determining a monitoring signal (M) depending on the comparison of each acquired first output torques (OT1) to a respective predetermined first threshold torque (TT1), wherein the predetermined first threshold torque differs (TT1) for at least two of the predetermined first threshold torques (TT1).

13. High lift system (16) according to claim 11 or 12, wherein the high lift system (16) comprises a sealing element (19A) and/or a spring element (19B) arranged between the wing body (18) and the moveable surface (20), the at least one predetermined first threshold torque (TT1) being predetermined as a function of the sealing element (19A) and/or spring element (19B).

14. Aircraft (10) comprising a high lift system (16) according to one of the claims 10 to 13.

15. Method of controlling an actuation of a high lift system (16) using an actuation control device (30) according to any of the claims 1 to 9, wherein the method comprises the following steps:
- acquisition of a first output torque (OT1) of a first high lift system actuator (24A);
- comparison of the acquired first output torque (OT1) to at least one predetermined first threshold torque (TT1); and
- determination of a monitoring signal (M) depending on the comparison of the acquired first output torque (OT1) to the at least one predetermined first threshold torque (TT1).
